# EUROPEAN PATENT APPLICATION

(11) **EP 2 444 882 A1**
(43) Date of publication of application: **25.04.2012**
(21) Application number: 10186605.1
(22) Date of filing: 05.10.2010
(51) Int. Cl.: G06F 3/048

(54) **Multi-view display**

(71) Applicant: Koninklijke Philips Electronics N.V., 5621 BA Eindhoven (NL)
(72) Inventor: Takken, Rob, 5656 AE Eindhoven (NL)
(74) Representative: Damen, Daniel Martijn

(57) **Abstract**

A multi-view display system comprises a multi-view display panel with touch input capability. The display panel is controlled to present content inviting a touch input at a first set of display panel locations within a first display view intended for a first viewer, and to present content inviting a touch input at a second set of display panel locations within a second display view intended for a second viewer. The first and second sets of display panel locations do not overlap both in position and time. The touch input is interpreted at the first set of locations as relating to first display view (and its associated application) and is interpreted at the second set of locations as relating to the second display view (and its associated application).

## Description

### FIELD OF THE INVENTION

This invention relates to multi-view displays, in which different content for different viewers is provided by a display screen to different spatial locations.

### BACKGROUND OF THE INVENTION

The most common example of this type of display is a dual view display, in which different content is provided to the left and right sides of the screen for two different viewers. A common example of the use of this type of display is for in-car entertainment systems, where the driver and passenger need different information content.

This invention is concerned particularly with implementing touch screen input in this type of display. Dual-view touch screen devices are known for example from W02004/081777.

Typically the views on such a dual view touch screen display are not related to the same content. That means that the first view corresponds with an image being generated by a first application and that the second view corresponds with another image being generated by a second application. For example, the first application corresponds to a movie and the second application corresponds to a car navigation program. Both applications might be running for one single user who is alternately watching the first view and the second view. However, more often there are multiple users, each of them watching one of the views being generated by the display device.

If such a display has a touch sensitive screen, a problem arises in that both viewers can provide feedback by means of the user interface. However the different applications (the car navigation application and the media player for example) cannot determine which application the user input is intended for.

WO2004/081777 provides a solution to this problem, based on the determination of the position of a hand of a user or a pointing device held by the hand in order to determine from which direction the user is approaching the display. This direction in turn is considered as the distinguishing factor in determining in which application context the user input should be interpreted.

The implementation of the direction determining arrangement adds unwanted complexity. There is therefore a need for a display system which is arranged to accept user inputs for multiple applications corresponding to display information provided as (at least) first and second views, in a manner that does not require this direction determination means.

### SUMMARY OF THE INVENTIOIN

The invention foresees in the aforementioned need. The invention is defined by the independent claims. The dependent claims provide advantageous embodiments.

The display system of the invention provides at one moment in time a first user with a representation of a first touch input selector in the first view and at the same time not providing a touch input selector at the corresponding spatial position in the second view for the second user. Thereby the display device is able to determine that input to that selector has to be associated with the first user rather than the second user.

Preferably, the first and second sets of panel display locations do not overlap in position, but the content can be provided at the same time. In this way, simultaneous provision of touch input to both applications is enabled.

The presentation of the content inviting a touch input at a first set of display panel locations and presentation of the content inviting a touch input at a second set of display panel locations may overlap in time. This makes it possible that input is requested at the same time in different display panel locations and thus for different users.

Preferably, a first application is associated with the first display view and a second application is associated with the second display view. Thus, if a touch input relates to a first view, then it must relate to the application that generated the content for that first view.

The controller can be adapted to control the display panel to present content inviting a touch input at a third set of display panel locations, wherein the touch input at the third set of locations relates to the first or second application. The first and second sets of locations can always be allocated to a respective one of the applications, but the third set of locations enables the touch input to be provided preferentially in one of the views depending on the requirements of the respective application, in particular the requirement for input data from the user.

Accordingly it becomes possible to selectively associate touch input received from the third set of locations solely with one of the two applications at one moment in time. As a result, the area for providing input to the first application can be substantially enlarged through the association of the third set of locations with the first application. By subsequent association of the third set of locations with the second application, and thus implicitly disassociating the first application from the third set of locations, the area for providing input to the second application may also be substantially enlarged.

The controller can be further adapted to control the display panel in a data acquisition mode in which the full display panel area is allocated to touch input for the first or second application.

In this way, the full touch sensor capability is allocated to one application while significant input data is needed, for example entering journey information for a satellite navigation application.

The system can comprise a dual view system, for example an in-car entertainment system, wherein the first and second applications comprise a media player and a satellite navigation system.

Optionally the multi-view system is arranged to have multiple modes of operation, a first mode being a dual view mode and a second mode being a multi-view autostereoscopic viewing mode. In the latter mode the respective views of the multi-view system are provided with respective views of stereoscopic image pair(s) of a stereoscopic image sequence(s), so as to enable a single viewer positioned at a proper location in front of the display to perceive stereoscopic images and/or image sequences.

In order to switch between modes of operation means are provided, e.g. in the form of an on-screen user interface element, to switch between modes of operation. Using this switch mechanism the system may not only control the display process, but may also control the mode of operation of the controller. Accordingly, in the multi-view mode the controller is arranged to operate according to the present invention and thus disambiguate the touch input for the respective applications and in autostereoscopic mode the controller is arranged not to disambiguate, but to associate all touch input with the application driving the autostereoscopic display.

The invention also provides a method of controlling a multi-view display system which comprises a multi-view display panel, wherein the panel has touch input capability, the method comprising:
- presenting content inviting a touch input at a first set of display panel locations within a first display view intended for a first viewer;
- presenting content inviting a touch input at a second set of display panel locations within a second display view intended for a second viewer, wherein the first and second sets of display panel locations do not overlap both in position and time; and
- interpreting touch input at the first set of locations as relating to the first display view and interpret touch input at the second set of locations as relating to the second display view.

The method can be implemented by a computer program which is part of a system controller.

### BRIEF DESCRIPTION OF THE DRAWINGS

Examples of the invention will now be described in detail with reference to the accompanying drawings, in which:
Figure 1 shows initial views presented to two viewers;
Figure 2 shows how when an application is launched, the touch input can be dedicated to that application;
Figure 3 shows two application views, one for each of two viewers, or both for a single viewer who can switch between the applications;
Figure 4 shows how the display area can be divided into areas dedicated to each viewer and also an area which can be used for either application depending on the application requirements;
Figure 5 shows how some display areas of Figure 4 trigger a change in state and others do not;
Figure 6 shows a system of the invention;
Figure 7A and 7B respectively show a first and second view of a dual-view games device using the present invention; and
Figure 8A and 8B respectively show a first and second view of a dual-browsing application.

### DETAILED DESCRIPTION OF EMBODIMENTS

The invention uses the fact that the content as presented to respective views of the dual-view touch screen device can be different.

Consider for example a dual-view touch screen display system where two viewers are positioned side-by-side positioned in front of and facing the dual-view display system. The viewers are positioned such that a first viewer, positioned to the left of the center of the display observes a first view and a second viewer, positioned to the right of the center of the display observes a second view.

In this scenario each of the viewers observing the display perceives an image, corresponding with their respective view, originating from the dual-view display. The view as perceived by the viewer covers the entire active area of the dual view display device.

When the multi-view system is implemented using a barrier or lenticular-based dual-view display device, the actual display panel of the dual-view display device displays two interleaved views simultaneously, but an optical directing means in the form of the barrier or lenticular is provided to direct (sub)pixels of the respective views in their respective directions. As a result the respective viewers are provided with distinct views.

When such a device has (multi-) touch input capability, the respective viewers can (simultaneously) both provide touch input, thereby rendering the context of the input unclear. In order to disambiguate the input the prior art suggests to provide detecting means to determine the respective application context of the input based on the location of the person providing the input.

However, it is an insight of the inventor that it is possible to address this issue without the need for such detecting means as each of the views may be presented with content that is particular to that view.

As a result, invitations for input instructions are provided to users of the system such that the system can infer the proper context of user input from the location on the touch screen where the user input is provided.

The invention provides, at one moment in time, a representation of a graphical input means in the first view perceived by the first user, such as a button, a radio switch or other selector, which can be operated by the first user by means of interaction with the touch screen. This representation is content which invites a touch input, in that the content displayed represents a command which takes effect when that part of the screen is touched. This content is provided in a set of (spatial) locations on the display panel. The set may have only one location/area (i.e. a single touch input icon) or it may have multiple locations/areas (i.e. a set of touch input icons). The set of locations may be grouped together to define a portion of the display panel area.

At the same time, there is not a similar representation of an input means presented in the second view at that same spatial position on the display.

The two representations can be separated in time and/or spatial position, so that when a touch input is provided, it is only associated with an image provided to one view, and therefore the context of that input is clear; i.e. the touch input relates to the application which is associated with the respective view.

In this way, when the touch screen detects user inputs, the spatial location where such input is provided also determines the context of the received input. Thus, the display device can infer the proper application context from the spatial location on the touch screen where the input was provided.

The invention does not require any modification to the known and commercially available multi-view display hardware. A multi-view display can use a lenticular screen to direct different views to different regions. Alternatively, barrier systems are also well known for isolating individual views to specific output directions, as well as directional backlights. Any of these known multi-view approaches can be adopted, and this invention is concerned only with the user interface and the way touch input is to be interpreted. The invention can be implemented as a change in the content used to drive the display and the way touch input signals are processed. As completely conventional hardware can be used, further details will not be presented in this application.

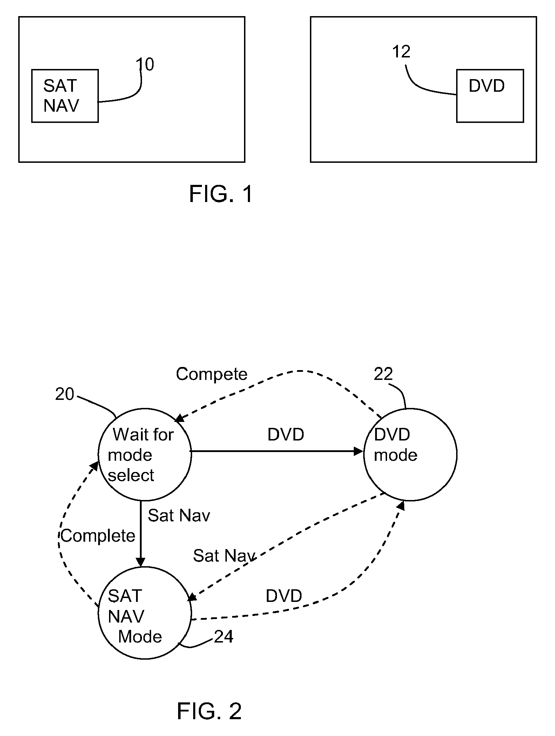

A main example of use of the display system of the invention is in car information display systems. Figure 1 illustrates how the present invention allows the selection of satellite navigation function by viewer 1, who is presented with the display image shown on the left of Figure 1, and DVD playback functionality by viewer 2, who is presented with the display image shown on the right of Figure 1.

The "Sat Nav" icon 10 is content inviting a touch input, in that if the icon is touched, the Satellite Navigation application is launched, and the display output generated by that application is presented to the respective view. The "DVD" icon 12 is also content inviting a touch input, in that if the icon is touched, the DVD application is launched, and the display output generated by that application is presented to the respective view.

The touch input is thus associated with one application being hosted by the system. The fact that "first" and "second" applications are referred at various points in this description does not imply that they require separate processors, or indeed that the applications are totally separate entities. They may for example together define a common execution thread and could therefore be considered as a single application. However, the functions executed, and the information presented to the viewer, are separately and independently controllable, and to this extent the different views can be considered to relate to different applications. In this respect the invention aims to disambiguate the touch input for the thread or threads such that touch input provided in the context of an invitation for touch input in a particular view, will be used by the controller to trigger one or more events in the context of that invitation rather than for other invitations in the same or in another view.

The two icons are at different locations, so that they do not overlap in position - although they can overlap in time, in that both can be presented at the same time - one to each viewer.

If the touch screen receives input, the touch screen can infer the context of the input from the spatial location of the input on the display. By context is meant the view, and therefore the corresponding application, to which the touch input relates.

The location of the position of the touch input locations (buttons) on the screen is selected such that it allows effective interpretation of the selected input; i.e. that sufficient space is kept between the respective buttons so as to allow imprecise input, which e.g. in a car application may result from driving.

Input from the user of the system may be used in different manners; e.g. in case of a complex input sequence, such as entering an address in a car navigation application, it may be beneficial to bring the touch screen device to a dedicated input mode.

In particular, some operations require many touch inputs, and it is desirable to have the full screen available. Figure 2 shows a state diagram which shows that dedicated input modes can be activated when an application is initially run.

As indicated in Figure 2 a "wait for mode select" state 20 presents the view as shown in Figure 1 in order to allow users to select a dedicated input mode. This wait for mode select state can be a default state. When a suitable touch input is received, the mode is switched from the default mode to a dedicated input mode 22 or 24.

In the dedicated input mode 22, 24 all input received is used within the context of that application. This enables initial input to be entered more easily, for example using the full screen as a keyboard, for entering destination data into a navigation application. When in the dedicated input mode, an explicit option is available to return to the mode select state or to another mode such as the DVD mode.

When the user has finished entering an address or other more complex user interface function in the dedicated input mode, the user may complete the action then return back to the mode selection state as shown in Figure 2. The user input screen again is then shared between both users.

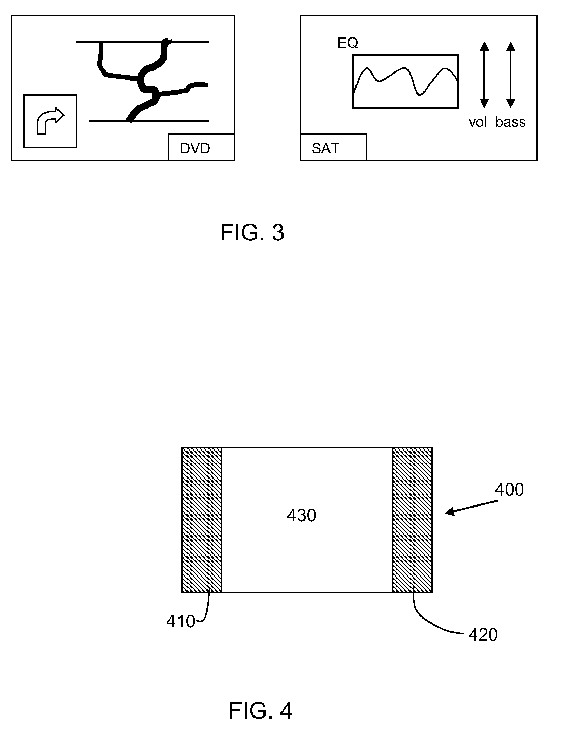

Figure 3 shows the two views to a viewer in car navigation mode (left image) and a user in the mediaplayer mode (right image). Alternatively, a single viewer can switch between different modes, and to exclusively use the entire display.

The dedicated input mode is not essential. For example, it may be beneficial to provide a mode which allows complex touch input interaction (as for the dedicated input mode described above) but without claiming the entire touch screen for input.

Figure 4 shows how the screen 400 can be divided into different areas (in this example rectangular but other choices are equally viable), wherein there is an area 410 for exclusive positioning of first input means (buttons/selectors) for user 1 and an area 420 for exclusive positioning of second input means for user 2 and an area 430 which can be shared for inputs between user 1 and user 2 or which could be assigned to user 1 and user 2 exclusively at different times.

The idea behind having dedicated areas for respective users is that this enables the implementation of functions that are regularly needed, e.g. for a satellite navigation application the zoom in/zoom out option, and or the bird's eye-view or top-view selection. For a mediaplayer, this might be the volume up/down slider, next radio station, CD/DVD/USB mode selection etc.

As a result of such dedicated areas, the regularly used functions do not require a state change being effected within the controlling device, but instead the context can be inferred at all times. In addition, the use of dedicated areas simplifies the construction of the user interface in that it allows a static allocation of commonly used user interface elements to a particular location providing a more consistent user interface design. Preferably, the dedicated areas are located spatially with the most likely position of the user; e.g. in mainland Europe the satellite navigation user is likely to be the person seated on the left (facing the display), the media player user being the person on the right (facing the display). In this manner each user will only minimally disturb the other user when operating the controls.

The shared area 430 can be used in two modes:
In a shared mode, area 430 can be used by two applications simultaneously with the relevant input areas spatially separated, or indeed the same area could be used at different times for the different applications that are running - although this will require the touch input icon to flash on and off for each user (out of phase between the two users).
In a dedicated mode, area 430 can be used for one application only, for example in a set up page.

When the center part of the display is used for displaying input means for one user exclusively this should preferably be indicated to the other user in that the view intended for this other viewer shows a notification "User 1 exclusive mode" or ghosts the touch input icons in area 430.

Although the above example describes a relatively static allocation of display real-estate to respective applications, it is noted that sets of touch screen locations/areas may be associated with different applications over time, albeit with one application at a time.

In accordance with the present invention sets of locations for touch input may be dynamically associated with a particular application over time. As a result a first example set may at one moment be associated with the first application and a second example set may at the same moment be associated with the second application, but at a different moment in time, these associations may be modified or even reversed.

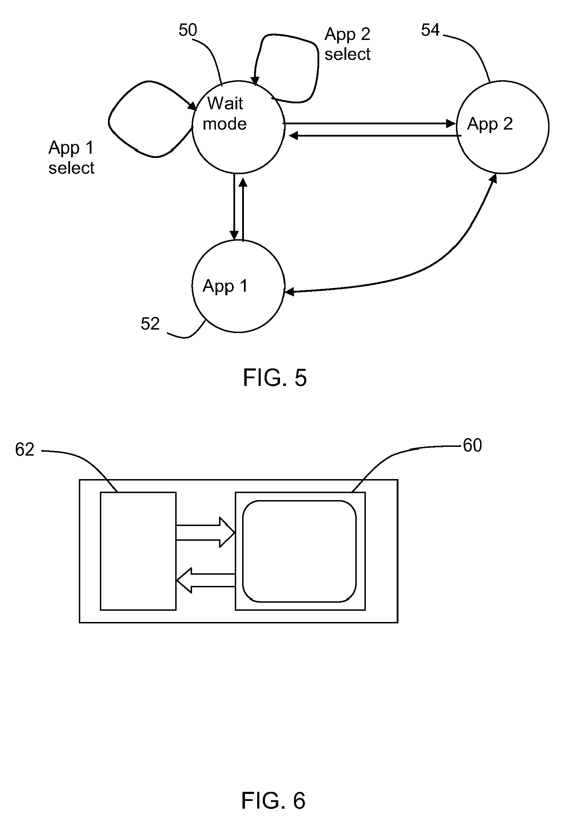

Figure 5 presents an overview of a state diagram illustrating a "user exclusive" mode combined with user dedicated areas as shown in Fig. 4.

Both users can provide user input to their dedicated input areas at the same time and without needing to change to a different image. As a result, there does not need to be state transition in the system, the spatial location alone can be used to infer the context. This takes place during the default mode 50, during which either user can input data, as shown, without requiring a mode transition.

However, when a more intricate operation is required by one user, the state can transition to an application specific mode 52, 54.

Figure 6 shows the system of the invention, comprising a dual view display panel 60 and a controller 62. The controller comprises hardware and software for implementing the driving of the display with the multiple view output and for interpreting the touch sensor input.

The invention can be used for all dual-view displays having touch-screen input. The invention is independent of the actual technique used to direct the light of the display to the respective viewers. The invention can also be applied to systems providing more than two views, and the concepts above can be extended to three or more viewers.

The invention provides a low-cost alternative to the known systems for dual-view input devices in that it utilizes the legacy hardware, and infers context through proper positioning of the touch input content in the respective views as presented to the user. Applications for dual view displays include car-navigation, possibly in future also gaming applications.

As indicated earlier, a multi-view display system according to the present invention may be implemented in various ways. The system has been described with reference to a first and a second application. However in practice the system may be implemented using more than two threads.

For example consider a multi-view display system wherein the location for user interface input elements is statically arranged; i.e. the locations are fixed at compile time.

Consider an implementation comprising four threads, e.g. a first thread for acquiring the touch input, a second thread for disambiguating the touch input and forwarding the input to a first or a second application thread.

In this example, the second thread can be configured at compile time as user interface elements are statically arranged. In this case the second thread may be configured using e.g. a pixel accurate allocation map, a list of locations, a look-up table, or another data structure indicating which sets of locations/areas are associated with which respective application thread. By referencing this data structure the second thread can disambiguate the input and forward the input to the proper application thread.

In a more advanced implementation the second thread may receive input from the respective application threads indicating their state, such that the second thread may e.g. select an appropriate data structure based on the application thread states.

Although the above example relates to an implementation having a static allocation of user interface elements, the invention is not limited thereto.

More advanced implementations may be envisaged wherein e.g. the second thread performs dynamic user interface element allocation, wherein in response to requests from the application threads the second thread assigns locations on the display to the respective application threads and in the process conducts the allocation and relinquishing of input locations to and from the application threads.

Not only can the present invention be used in conjunction with known dual-view display devices, the present invention may also be used in conjunction with two-view autostereoscopic displays that have a multi-view mode.

Two-view autostereoscopic display devices are conceived to provide a respective left and right eye of a single viewer with respective left and right images of one or more stereoscopic image pairs over time. However, these displays may also be used for dual-view applications wherein a first user with both eyes perceives images from a first application corresponding with the left images of the stereoscopic image pairs and a second user with both eyes perceives images from a second application corresponding with the right images of the stereoscopic image pairs.

When operating in dual-view mode touch input provided to such a system will require disambiguation so as to determine the context of a particular touch input and thereby the corresponding application. However, when operating in stereoscopic mode there is no need for disambiguation, as the context of a particular touch input is clear; i.e. stereoscopic application.

Advantageously, when operating in stereoscopic mode, the spatial location of user interface elements for providing touch input to the stereoscopic application are positioned at the zero disparity plane; i.e. at the same spatial position in the left and right view image.

In order to switch between stereoscopic and dual-view mode of operation such a system requires switching means. These means, e.g. in the form of a user interface element visible in at least one, but preferably in both views, can also be used to switch on and of the touch input disambiguation process.

The present invention may further be used to implement a dual-view, dual-player mode. Such a dual-player mode may be implemented on a dedicated dual-view device or even on a two-view single player autostereoscopic display device. Consider a two-view autostereoscopic games device having (multi-) touch input capability. As indicated above, a two-view single user autostereoscopic display device may be used to implement a (monoscopic) dual-view application for two users, by effectively providing each respective user with a dedicated monoscopic view for both eyes.

In dual-view mode, the display is preferably partitioned in three areas. In the first view a first area is used as input area for a first application, a second area functions a display area for the first application and a third area functions is substantially not used. In the second view the first area is substantially not used, the second area functions as display area for the second application and the third area is used as input area for the second application. As a result of this particular allocation input may be provided by both users, possibly simultaneously, without obscuring the display area unnecessary.

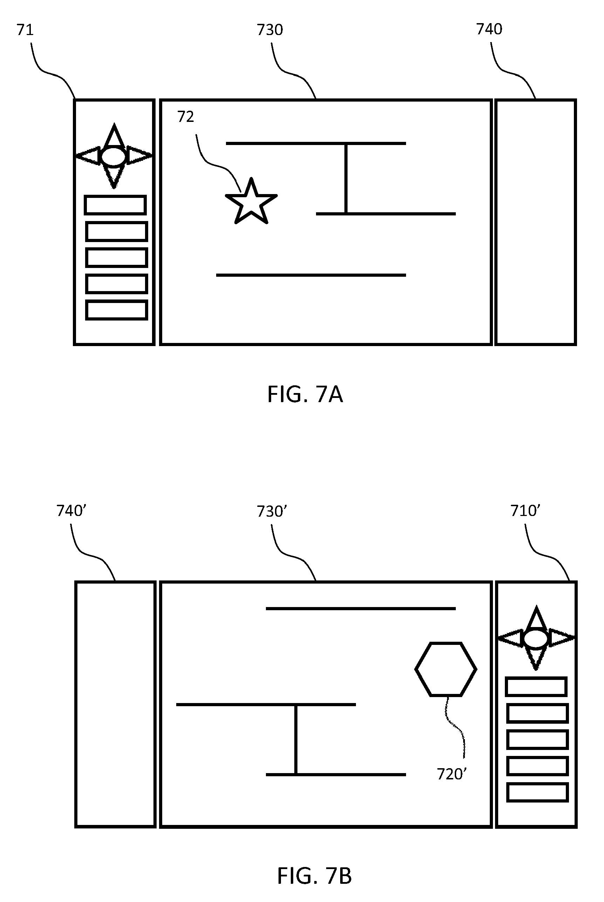

Fig. 7A illustrates how a first view may be constructed using three distinct areas on the display. Fig. 7A shows user interface elements for operating a first application by a first user, coinciding with a first set of touch input locations, located in the first view in area 710, while non user interface elements, e.g. motion video of a first avatar 720 may be depicted in area 730. Meanwhile in the first view the area 740 is muted; e.g. using a black color.

Fig. 7B illustrates how a second view may be constructed using the same three distinct areas on the display. Fig. 7B shows user interface elements for operating a second application by a second user, coinciding with a second set of touch input locations, being displayed in the second view in area 710', while non user interface elements, e.g. motion video of a second avatar 720' may be depicted in area 730'. Meanwhile in the second view the area 740' is muted; e.g. using a black color.

As a result the first user will, using the dual-view mode, perceive it natural to operate the first avatar using the first user interface elements on his side of the dual-view system, while he will not be bothered by the second user operating the second avatar on his side of the dual-view system.

The present invention may also be used to implement non gaming applications such as e.g. a dual-browsing application on a dedicated dual-view display or a multi-view autostereoscopic display device. Preferably the form factor of such a device is comparable with that of a palmtop PC, an eBook or an iPad, as marketed by Apple Inc. and provides support for multi-touch input.

Like the previous dual-player mode when the dual-browsing application is implemented using an autostereoscopic display device the views intended for providing left and right images respectively may be used to enable two persons to simultaneously browse photographs, wherein each person perceives only one of the two views in a monoscopic mode.

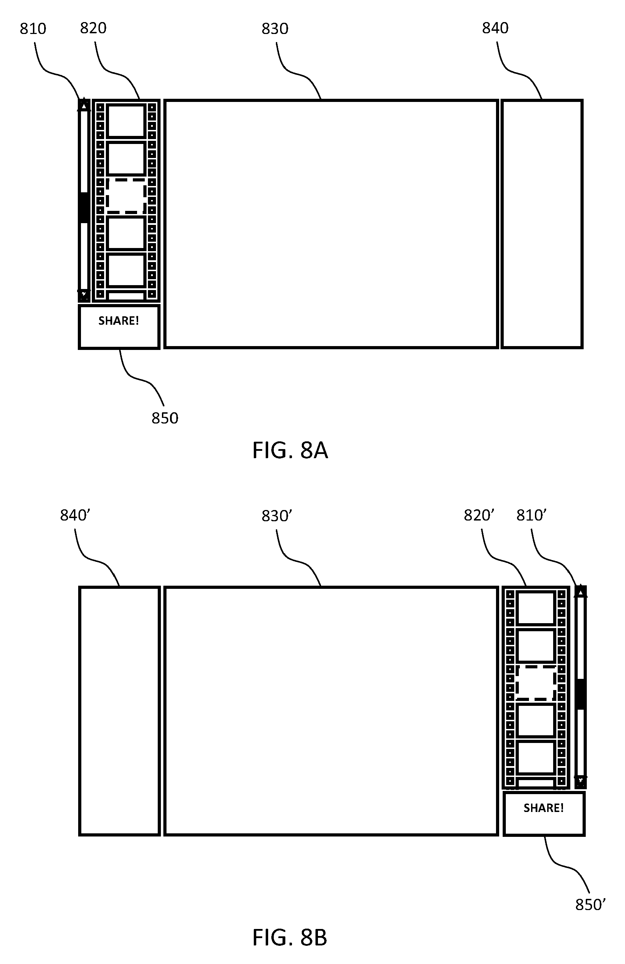

In dual-browsing mode, the display is also preferably partitioned in three areas, as described above with reference to Fig. 7A and 7B. Fig. 8A provides an image of the first view of the application. In the first view a first area including 810, 820 and 850 is used as input area for a first browsing application, a second area 830 functions as a display area for the first browsing application and a third area 840 is substantially not used. This second area may e.g. be muted using a background color, or a background texture. In the second view, as shown in Fig. 8B the area 840' corresponding with the first area in the first view is substantially not used, the area 830' corresponding with the second area 830 in the first view functions as display area for the second application and the areas 810', 820' and 850' corresponding with the third area 840 in the first view is used as input area for the second application.

With reference to Fig. 8A, user interface elements for operating a first browsing application may be provided in the first view in areas 810, 820 and 850. These user interface elements may e.g. be in the form of a vertical slider 810 adjacent to a filmstrip 820. By dragging the slider 810, the filmstrip can be moved up/down, so as to allow the first user to preview photographs from a set of photographs for display in the first view in area 430. A photograph may be selected for display, e.g. by selecting the thumbnail in the filmstrip.

Preferably the user interface elements visible in the first view also include a "share" button 850, underneath the vertical slider 810 which allows a user to share the selected photograph with the other user in that it allows the first application to pass the photograph or a link to the photograph to the second application for display in the area 830' in the second view.

Once more in the first view the area 840 is preferably muted so as not draw attention of the first user to this area of the display panel. This area in turn will be used by the second user to provide touch input to control the second application.

It will be clear to those skilled in the art that the user interface as shown in the second view is preferably a mirrored version of the first view, so as to allow both users to browse the same or possibly different photographs simultaneously.

Although the above example relates to browsing of photographs, the same techniques could be used for enabling the shared browsing of photographs, movies or other content.

The invention may be implemented in any suitable form including hardware, software, firmware or any combination of these. However, preferably, the invention is implemented as computer software running on one or more data processors and/or digital signal processors. The elements and components of an embodiment of the invention may be physically, functionally and logically implemented in any suitable way. Indeed, the functionality may be implemented in a single unit, in a plurality of units or as part of other functional units. As such, the invention may be implemented in a single unit, or may be physically and functionally distributed between different units and processors.

Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality.

The mere fact that certain measures are recited in mutually different dependent claims does not indicate that a combination of these measured cannot be used to advantage.

A computer program may be stored/distributed on a suitable medium, such as an optical storage medium or a solid-state medium supplied together with or as part of other hardware, but may also be distributed in other forms, such as via the Internet or other wired or wireless telecommunication systems. Any reference signs in the claims should not be construed as limiting the scope.

## Claims

1. A multi-view display system, comprising:
- a multi-view display panel, wherein the panel has touch input capability; and
- a controller for controlling the content provided to the different views and for interpreting the touch input,
wherein the controller is adapted to:
- control the display panel to present content inviting a touch input at a first set of display panel locations within a first display view intended for a first viewer, and to present content inviting a touch input at a second set of display panel locations within a second display view intended for a second viewer, wherein the first and second sets of display panel locations do not overlap both in position and time; and
- interpret touch input at the first set of locations as relating to the first display view and interpret touch input at the second set of locations as relating to the second display view.

2. A system as claimed in claim 1, wherein the first and second sets of panel display locations do not overlap in position.

3. A system as claimed in claim 2, wherein the presentation of the content inviting a touch input at a first set of display panel locations and presentation of the content inviting a touch input at a second set of display panel locations overlap in time.

4. A system as claimed in claim 2 or 3, wherein the controller is adapted to control the display panel to present content inviting a touch input at a third set of display panel locations, wherein the touch input at the third set of locations relates to the first or second views.

5. A system as claimed in any preceding claim, wherein the controller is further adapted to:
control the display panel in a data acquisition mode in which the full display panel area is allocated to touch input to the first or second view.

6. A system as claimed in any preceding claim, comprising a dual view system.

7. A system as claimed in claim 5 comprising an in-car entertainment system, wherein the first and second views relate to a media player and a satellite navigation system respectively.

8. A motor vehicle comprising a multi-view display system as claimed in any one of claims 1 to 6.

9. A method of controlling a multi-view display system which comprises a multi-view display panel, wherein the panel has touch input capability, the method comprising:
- presenting content inviting a touch input at a first set of display panel locations within a first display view intended for a first viewer;
- presenting content inviting a touch input at a second set of display panel locations within a second display view intended for a second viewer, wherein the first and second sets of display panel locations do not overlap both in position and time; and
- interpreting touch input at the first set of locations as relating to the first display view and interpret touch input at the second set of locations as relating to the second display view.

10. A method system as claimed in claim 9 wherein the first and second sets of panel display locations do not overlap in position.

11. A method as claimed in claim 10, comprising presenting content inviting a touch input at a third set of display panel locations, wherein the touch input at the third set of locations relates to the first or second views, depending on the requirement for input data of the applications to which the views relate.

12. A method as claimed in any one of claims 9 to 11, comprising controlling the display panel in a data acquisition mode in which the full display panel area is allocated to touch input one of the applications to which the views relate.

13. A method as claimed in any one of claims 9 to 12, for controlling a dual view system.

14. A method as claimed in claim 13 for controlling an in-car entertainment system, wherein the first and second views relate to a media player and a satellite navigation system respectively.

15. A computer program comprising code means adapted to perform the method of any one of claims 9 to 14 when said program is run on a computer.

16. A computer program product comprising the computer program as claimed in claim 15.
